# FASCICULE DE BREVET EUROPEEN

(11) **EP 3 529 168 B1**
(45) Date de publication et mention de la délivrance du brevet: **02.12.2020**
(21) Numéro de dépôt: 17792125.1
(22) Date de dépôt: 13.10.2017
(51) Int. Cl.: B65D 81/20

(54) **DISPOSITIF DE SELECTION DES GAZ POUR CONTENANT POUR LE STOCKAGE DE PRODUITS PERISSABLES**
VORRICHTUNG ZUR AUSWAHL VON GASEN FÜR EINEN BEHÄLTER ZUR LAGERUNG VERDERBLICHER PRODUKTE
DEVICE FOR SELECTING GASES FOR A CONTAINER FOR STORING PERISHABLE PRODUCTS

(30) Priorité: 19.10.2016 FR 1660134
(43) Date de publication de la demande: 28.08.2019
(73) Titulaire: Janny Sarl, 71260 Peronne (FR)
(72) Inventeur: JANNY, Pierre, 71260 Peronne (FR)
(74) Mandataire: Oudin, Stéphane
(86) Numéro de dépôt international: PCT/FR2017/052823
(87) Numéro de publication internationale: WO 2018/073514

(56) Documents cités:
- WO-A2-2005/074466
- WO-A2-2007/016427
- FR-A1- 2 686 577

## Description

### Domaine technique

La présente invention concerne le domaine général des contenants étanches de stockage à atmosphère modifiée ou contrôlée comprenant un espace dans lequel sont stockés des produits périssables à conserver.

### Technique antérieure

Il est connu d'utiliser de tels contenants étanches notamment pour stocker des produits périssables, tels que, par exemple, des fruits et légumes, des champignons ou encore des fleurs, dans une atmosphère modifiée ou contrôlée, afin d'augmenter la durée de conservation de ces produits. Un tel contenant est connu par FR2686577.

L'étanchéité de ce type de contenant est très importante car elle permet de maintenir dans ledit contenant les taux d'oxygène et de gaz carbonique requis pour garantir la meilleure durée de conservation possible.

Toutefois, dans ce type de contenant, il est également très important de contrôler le passage, de façon sélective, des gaz de l'air ambiant extérieur et intérieur, afin d'assurer une atmosphère modifiée ou contrôlée à l'intérieur dudit contenant, de sorte à augmenter la durée de conservation de ces produits contenus dans ce dernier, ledit passage des gaz étant fonction du volume intérieur dudit contenant et du type de produits contenus dans le bac.

### Exposé de l'invention

Le but de la présente invention est de proposer un dispositif de sélection des gaz permettant d'obtenir une atmosphère modifiée ou contrôlée à l'intérieur d'un contenant étanche de stockage comportant au moins un espace contenant des produits périssables tels que, par exemple, des fruits et légumes, ou encore des fleurs. Ledit dispositif de sélection des gaz, selon l'invention, permet d'adapter rapidement et simplement les échanges entre l'intérieur dudit contenant et les gaz de l'air ambiant extérieur et intérieur, de façon sélective, en fonction des dimensions du contenant et/ou des produits à stocker.

Conformément à l'invention, il est donc proposé un dispositif de sélection des gaz pour un contenant étanche de stockage à atmosphère modifiée ou contrôlée pour stocker des produits périssables tels que, par exemple, des fruits et légumes, ou encore des fleurs, comportant un corps creux et au moins un premier orifice, un deuxième orifice et une première membrane, lesdits premier et deuxième orifices mettant en relation l'intérieur dudit corps avec l'extérieur de ce dernier, ladite première membrane étant disposée à l'intérieur dudit corps entre lesdits premier et deuxième orifices de sorte que les gaz s'écoulant depuis le premier orifice vers le deuxième orifice, ou réciproquement, passent obligatoirement et uniquement au travers de ladite première membrane, ledit corps comprenant au moins un premier carter muni au moins dudit premier orifice et un deuxième carter muni au moins dudit deuxième orifice, ledit dispositif de sélection des gaz étant remarquable en ce que ledit deuxième carter comporte au droit du deuxième orifice un tube cylindre creux s'étendant en saillie vers l'extérieur du corps et étant agencé pour venir s'insérer dans un orifice aménagé sur l'une des parois du contenant mettant en relation l'intérieur du contenant avec l'extérieur de ce dernier, afin de solidariser le dispositif de sélection des gaz, de façon étanche, sur ladite paroi du contenant, au droit dudit orifice, de manière à permettre un écoulement depuis gaz de son deuxième orifice au travers dudit orifice de la paroi, ou réciproquement.

Le tube cylindre creux s'étend au-delà de ladite paroi dans laquelle il est agencé pour s'insérer.

De manière avantageuse, le tube est muni à son extrémité libre d'un organe de fixation apte à coopérer avec un organe de fixation complémentaire pour permettre la solidarisation de façon non permanente du deuxième carter sur ladite paroi.

De manière encore plus avantageuse, le dispositif de sélection des gaz comporte un joint d'étanchéité agencé pour être comprimé entre la paroi du contenant et le deuxième carter, lorsque le dispositif de sélection des gaz est solidarisé sur le contenant.

Selon un mode de réalisation préféré, lesdits premier et deuxième carters sont assemblés de façon étanche entre eux et la première membrane est mise en place de sorte que son bord périmétrique est enserré, de manière étanche, entre les bords périmétriques respectifs desdits premier et deuxième carters.

Selon une variante de réalisation, le deuxième carter comprend un orifice correspondant au troisième orifice du corps et mettant en relation l'intérieur du deuxième carter avec l'extérieur de ce dernier, le corps comporte entre le premier carter et le deuxième carter, deux troisièmes carters globalement tubulaires et un quatrième carter disposé entre lesdits troisièmes carters et comportant au moins un orifice transversal correspondant au quatrième orifice du corps et mettant en relation l'intérieur dudit quatrième carter avec l'extérieur de ce dernier et le dispositif de sélection des gaz comporte une deuxième membrane et deux troisièmes membranes disposées à l'intérieur dudit corps de sorte que les gaz qui s'écoulent depuis les premier, troisième et quatrième orifices du corps vers le deuxième orifice dudit corps, ou réciproquement, passent obligatoirement et uniquement au travers respectivement des première, deuxième et troisièmes membranes.

Selon une autre variante de réalisation, le corps comporte entre le premier carter et le deuxième carter, un troisième carter globalement tubulaires et un quatrième carter comportant au moins un orifice transversal correspondant au troisième orifice du corps et mettant en relation l'intérieur dudit quatrième carter avec l'extérieur de ce dernier et le dispositif de sélection des gaz comporte deux deuxièmes membranes disposées à l'intérieur dudit corps de sorte que les gaz qui s'écoulent depuis les premier et troisième orifices du corps vers le deuxième orifice dudit corps, ou réciproquement, passent obligatoirement et uniquement au travers respectivement des première et deuxièmes membranes.

De manière avantageuse, chaque membrane est plissée.

Selon une dernière variante de réalisation, le dispositif de sélection des gaz comporte deux deuxièmes orifices et est associé en série avec au moins un dispositif de sélection des gaz identique de sorte à raccorder entre eux un de leurs deux deuxièmes orifices grâce à au moins une gaine, l'ensemble ainsi obtenu étant alors, d'une part, solidarisé, de façon étanche, sur l'une des parois du contenant, au droit de deux orifices aménagés sur ladite paroi et mettant en relation l'intérieur du contenant avec l'extérieur de ce dernier, de manière à permettre un écoulement de gaz depuis les deuxièmes orifices libres, au travers dudit orifice associé de la paroi, ou réciproquement et, d'autre part, raccordé, à l'une de ses extrémités libres, à des moyens de soufflage, afin de créer une ventilation forcée à l'intérieur des deux dispositifs de sélection des gaz et du contenant étanche.

### Description sommaire des figures

D'autres avantages et caractéristiques ressortiront mieux de la description qui va suivre d'un mode d'exécution d'un dispositif de sélection des gaz pour un contenant étanche de stockage à atmosphère modifiée ou contrôlée de produits périssable selon l'invention en référence aux figures annexées sur lesquelles :
- la figure 1 est une vue schématique en coupe d'un dispositif de sélection des gaz selon l'invention ;
- la figure 2 est une vue schématique en coupe éclatée d'un dispositif de sélection des gaz de la figure 1 ;
- la figure 3 est une vue schématique partielle en coupe d'une première variante du dispositif de sélection des gaz selon l'invention ;
- la figure 4 est une vue schématique partielle en coupe d'une deuxième variante du dispositif de sélection des gaz selon l'invention ;
- la figure 5 est une vue schématique partielle en coupe d'une troisième variante du dispositif de sélection des gaz selon l'invention ;
- la figure 6 est une vue schématique partielle en coupe d'une quatrième variante du dispositif de sélection des gaz selon l'invention ;
- la figure 7 est une vue schématique partielle en coupe d'une dernière variante du dispositif de sélection des gaz selon l'invention ;
- la figure 8 est une vue schématique de deux dispositifs de sélection des gaz selon la figure 7 mis en série.

### Meilleure manière de réaliser l'invention technique

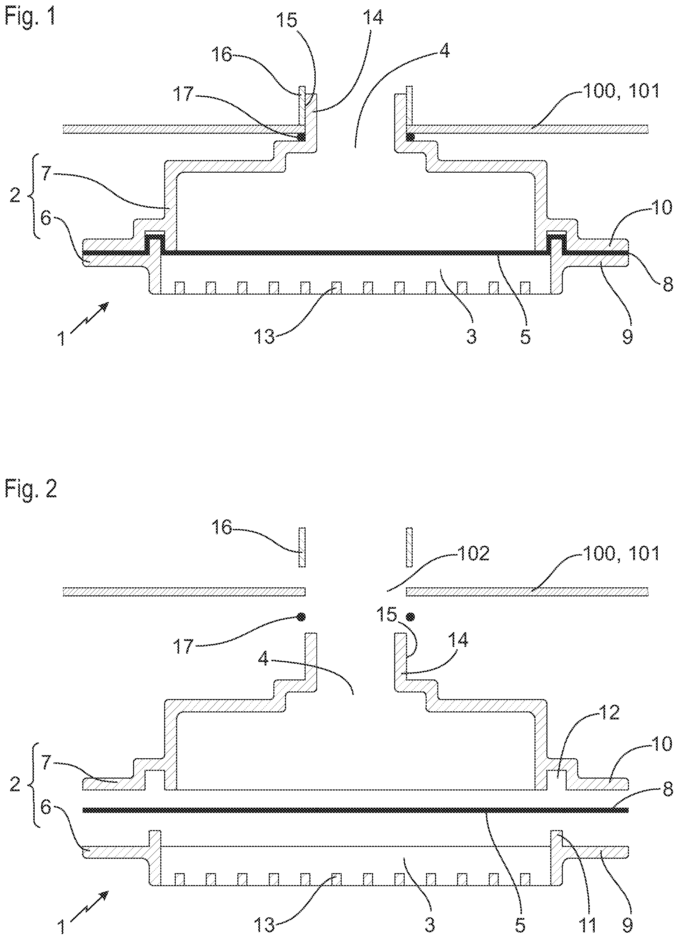

En référence aux figures 1 à 2, l'invention concerne un dispositif de sélection des gaz 1 pour un contenant 100 étanche de stockage à atmosphère modifiée ou contrôlée pour stocker des produits périssables tels que, par exemple, des fruits et légumes, ou encore des fleurs, non représentés sur les figures.

Le dispositif de sélection des gaz 1 comporte un corps 2 creux et au moins un premier orifice 3, un deuxième orifice 4 et une première membrane 5, lesdits premier et deuxième orifices 3,4 mettant en relation l'intérieur dudit corps 2 avec l'extérieur de ce dernier, ladite première membrane 5 étant disposée à l'intérieur dudit corps 2 entre lesdits premier et deuxième orifices 3,4 de sorte que les gaz s'écoulant depuis le premier orifice 3 vers le deuxième orifice 4, ou réciproquement, passent obligatoirement et uniquement au travers de ladite première membrane 5.

On comprend bien que le dispositif de sélection des gaz 1 pourra comporter plusieurs premiers orifices 3 et/ou plusieurs deuxièmes orifices 4 et/ou plusieurs premières membranes 5, sans sortir du cadre de la présente invention.

En outre, le dispositif de sélection des gaz 1 est agencé pour être solidarisé, de façon étanche et de préférence amovible, sur l'une 101 des parois du contenant 100, au droit d'un orifice 102 aménagé sur ladite paroi 101 et mettant en relation l'intérieur du contenant 100 avec l'extérieur de ce dernier, de manière à permettre un écoulement de gaz de son deuxième orifice 4 au travers dudit orifice 102, ou réciproquement.

Selon un mode de réalisation préféré, le corps 2 du dispositif de sélection des gaz 1 comporte un premier carter 6 muni au moins du premier orifice 3 et un deuxième carter 7 muni au moins du deuxième orifice 4, lesdits premier et deuxième carters 6,7 étant assemblés de façon étanche entre eux.

Dans cette configuration, la première membrane 5 est mise en place de sorte que son bord périmétrique 8 est enserré, de manière étanche, entre lesdits premier et deuxième carters 6,7 et, de préférence, entre leurs bords périmétriques 9,10 respectifs. Pour assurer une parfaite étanchéité au niveau de la première membrane 5, le premier carter 6 comporte le long de son bord périmétrique 9 des moyens de liaison 11 coopérant avec des moyens de liaison complémentaires 12 disposés le long du bord périmétrique 10 du deuxième carter 7. Les moyens de liaison 11 et les moyens de liaison complémentaires 12 sont respectivement des organes mâle et femelle ou des organes femelle et mâle, l'organe mâle étant de préférence un rebord s'étendant perpendiculairement du bord périmétrique associé et l'organe femelle étant de préférence une rainure aménagée dans le bord périmétrique associé.

Le premier carter 6 comporte de préférence au droit du premier orifice 3 une grille 13 afin d'assurer une protection mécanique de la membrane 6 contre les chocs tout en permettant l'écoulement des gaz.

Selon ce mode de réalisation préféré, le deuxième carter 7 comporte au droit du deuxième orifice 4 un tube 14 cylindre creux s'étendant en saillie vers l'extérieur du corps 2 du dispositif de sélection des gaz 1 et étant agencé pour venir s'insérer dans l'orifice 102 de la paroi 101 du contenant 100 et s'étendre au-delà de ladite paroi 101. Ce tube 14 est muni à son extrémité libre d'un organe de fixation 15 apte à coopérer avec un organe de fixation complémentaire 16 pour solidariser de façon non permanente le deuxième carter 7 sur ladite paroi 101, et par conséquent le dispositif de sélection des gaz 1 sur ledit contenant 100.

Ainsi, en référence à la figure 1, lorsque le tube 14 est inséré dans l'orifice 102 de la paroi 101 du contenant 100, son extrémité libre est alors située de l'autre côté de ladite paroi 101 et l'organe de fixation 15 et l'organe de fixation complémentaire 16 coopèrent ensemble de sorte à exercer un effort sur le dispositif de sélection des gaz 1 tendant à appliquer le deuxième carter 7 contre la paroi 101 et donc solidariser l'ensemble dispositif - contenant 100. Pour assurer l'étanchéité de cette solidarisation, un joint 17 d'étanchéité, avantageusement un joint torique, est disposé autour du tube 14 et agencé pour être comprimé entre le deuxième carter 7 et la paroi 101, lorsque le dispositif de sélection des gaz 51 est solidarisé sur le contenant.

L'organe de fixation 15 et l'organe de fixation complémentaire 16 sont respectivement un filetage et un écrou. Toutefois, l'organe de fixation 15 et l'organe de fixation complémentaire 16 pourront être d'un tout autre type équivalent adapté tel que, par exemple, des raccords rapides semblables à ceux utilisés sur les équipements de pompier ou encore des ensembles clips - rainure, sans sortir du cadre de la présente invention.

On comprend bien que l'organe de fixation 15, l'organe de fixation complémentaire 16 et le joint 17 permettent de solidariser, de façon étanche et non permanente, le dispositif de sélection des gaz 1 sur le contenant 100.

Toutefois, on comprend également bien que le dispositif de sélection des gaz 1 pourra être solidarisé sur le contenant 100 de façon étanche et permanente par toute technique adaptée telle que, par exemple, le soudage, le collage ou encore le sertissage.

On comprend bien que le dispositif de sélection des gaz 1 selon l'invention permet d'adapter rapidement et simplement les échanges, avec l'intérieur dudit contenant 100, de gaz de l'air ambiant extérieur, de façon sélective, en fonction des dimensions du contenant et/ou des produits à stocker. En effet, une fois le contenant 100 fabriqué, il suffit soit de réaliser un orifice 102 dans l'une des parois 101 dudit contenant 100 et de solidariser un dispositif de sélection des gaz 1 de dimensions adaptées, soit de réaliser plusieurs orifices 102 dans une seule ou plusieurs des parois 101 dudit contenant 100 et de solidariser au droit de chaque orifice 102 un dispositif de sélection des gaz 1 de plus petites dimensions, cette dernière configuration permettant une répartition plus homogène des écoulements de gaz à l'intérieur dudit contenant 100.

L'Homme du Métier n'aura aucune difficulté pour déterminer et dimensionner chaque membrane en fonction de l'atmosphère souhaitée à l'intérieur du contenant et des produits contenus dans ce dernier.

Enfin, compte tenu de la configuration du dispositif de sélection des gaz 1, on comprend bien que ce dernier peut être solidarisé sur une paroi 101 du contenant 100 indifféremment à l'intérieur ou à l'extérieur dudit contenant 100.

### Description d'autres modes de réalisation

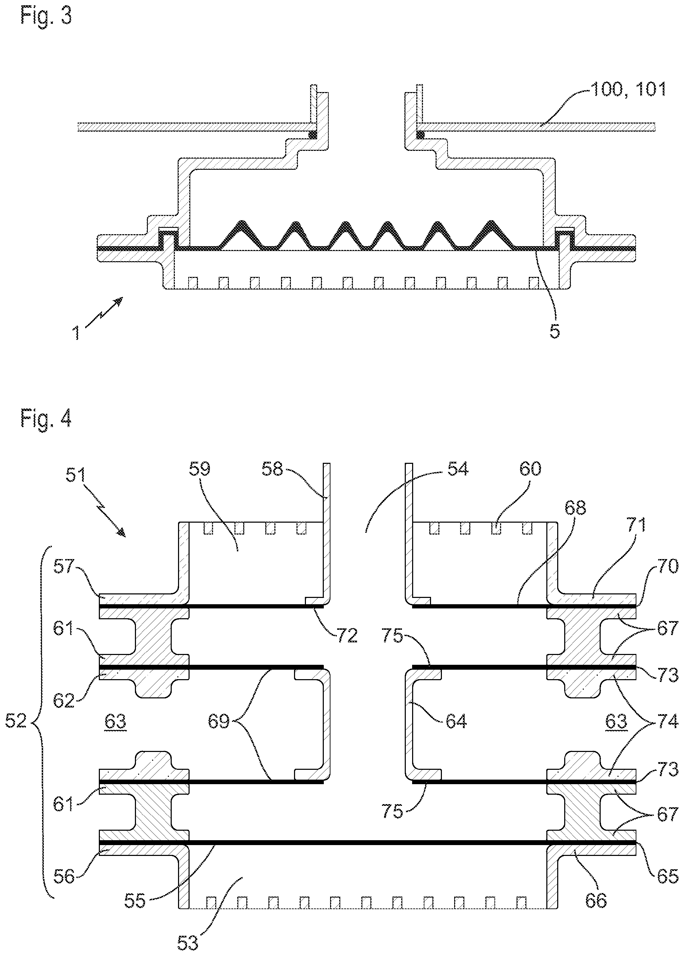

Selon une première variante de réalisation représentée à la figure 3, pour augmenter la surface de sélection des gaze du dispositif de sélection des gaz 1 sans devoir augmenter les dimensions hors-tout de ce dernier, la première membrane 5 est avantageusement plissée.

Selon une deuxième variante de réalisation représentée à la figure 4, le dispositif de sélection des gaz 51 comporte un corps 52 muni d'au moins un premier orifice 53, un deuxième orifice 54 et une première membrane 55 semblables à ceux précédemment décrits.

Par ailleurs, le corps 52 comporte un premier carter 56 muni au moins du premier orifice 53 et un deuxième carter 57 muni au moins du deuxième orifice 54.

Le premier carter 56 est identique au premier carter 6 précédemment décrit.

Le deuxième carter 57 est semblable au premier carter 6 précédemment décrit et comporte un tube 58 cylindre creux disposé au droit du deuxième orifice 54 et s'étendant en saillie vers l'extérieur du corps 52.

Toutefois, dans cette variante de réalisation, ledit tube 58 se prolonge également à l'intérieur dudit deuxième carter 57 sur toute son épaisseur. Le deuxième carter 57 comporte en outre un orifice correspondant au troisième orifice 59 du corps 52 et mettant en relation l'intérieur du deuxième carter 57 dudit corps 52 avec l'extérieur de ce dernier et comportant de préférence une grille de protection 60.

Le tube 58 est, de préférence, muni à son extrémité libre extérieure d'un organe de fixation, non représenté sur la figure 4, apte à coopérer avec un organe de fixation complémentaire, non représenté sur la figure 4, pour solidariser de façon non permanente le deuxième carter 57 sur une paroi du contenant, non représenté sur la figure 4, et par conséquent le dispositif de sélection des gaz 51 sur ledit contenant.

De même, le dispositif de sélection des gaz 51 comporte avantageusement un joint d'étanchéité, non représenté sur la figure 4, agencé pour être comprimé entre ladite paroi du contenant et le deuxième carter 57, lorsque le dispositif de sélection des gaz 51 est solidarisé sur le contenant.

De plus, cette variante de réalisation diffère du mode de réalisation précédent en ce que le corps 52 comporte en outre, entre le premier carter 56 et le deuxième carter 57, deux troisièmes carters 61 globalement tubulaires et un quatrième carter 62 disposé entre lesdits troisièmes carters 61. Lesdits carters 56,57,61,62 du corps 52 sont assemblés entre eux de manière étanche.

Le quatrième carter 62 comporte au moins un orifice transversal correspondant au quatrième orifice 63 du corps 52 et mettant en relation l'intérieur dudit quatrième carter 62 avec l'extérieur de ce dernier, et un tube de transfert 64 traversant le quatrième carter 62 de part en part dans le sens de son épaisseur, de sorte à permettre un écoulement de gaz au travers dudit quatrième carter 62.

Dans cette deuxième variante de réalisation, la première membrane 55 est mise en place de sorte que son bord périmétrique externe 65 est enserré, de manière étanche, entre le premier carter 56 et l'un des troisièmes carters 61 et, de préférence, entre leurs bords périmétriques 66,67 respectifs.

Par ailleurs, le dispositif de sélection des gaz 51 comporte une deuxième membrane 68 et deux troisièmes membranes 69 semblables à la première membrane 55 et de forme globalement annulaire.

La deuxième membrane 68 est mise en place de sorte, d'une part, que son bord périmétrique externe 70 est enserré, de manière étanche, entre le deuxième carter 57 et l'un des troisièmes carters 61 et, de préférence, entre leurs bords périmétriques 71,67 respectifs et, d'autre part, que son bord périmétrique interne 72 soit fixé de manière étanche autour de l'extrémité libre du tube 58 située à l'intérieur dudit deuxième carter 57, pour tout moyens adaptés tels que le collage, par exemple.

Chaque troisième membrane 69 est mise en place de sorte, d'une part, que son bord périmétrique externe 73 est enserré, de manière étanche, entre l'un des troisièmes carters 61 et le quatrième carter 62 et, de préférence, entre leurs bords périmétriques 67,74 respectifs et, d'autre part, que son bord périmétrique interne 75 soit fixé de manière étanche autour de l'une des extrémités libres du tube de transfert 64, pour tout moyens adaptés tels que le collage, par exemple.

Ainsi configuré, le dispositif de sélection des gaz 51 garantit que les gaz qui s'écoulent des premier, troisième et quatrième orifices 53,59,63 du corps 52 vers le deuxième orifice 54 dudit corps 52, ou réciproquement, passent obligatoirement et uniquement au travers respectivement des première, deuxième et troisième membranes 55,65,66.

On comprend bien que cette variante de réalisation permet d'augmenter la surface de sélection des gaze du dispositif de sélection des gaz 51 sans avoir à augmenter considérablement les dimensions hors-tout de ce dernier. Elle permet éventuellement de mettre en place des membranes de différentes constitutions.

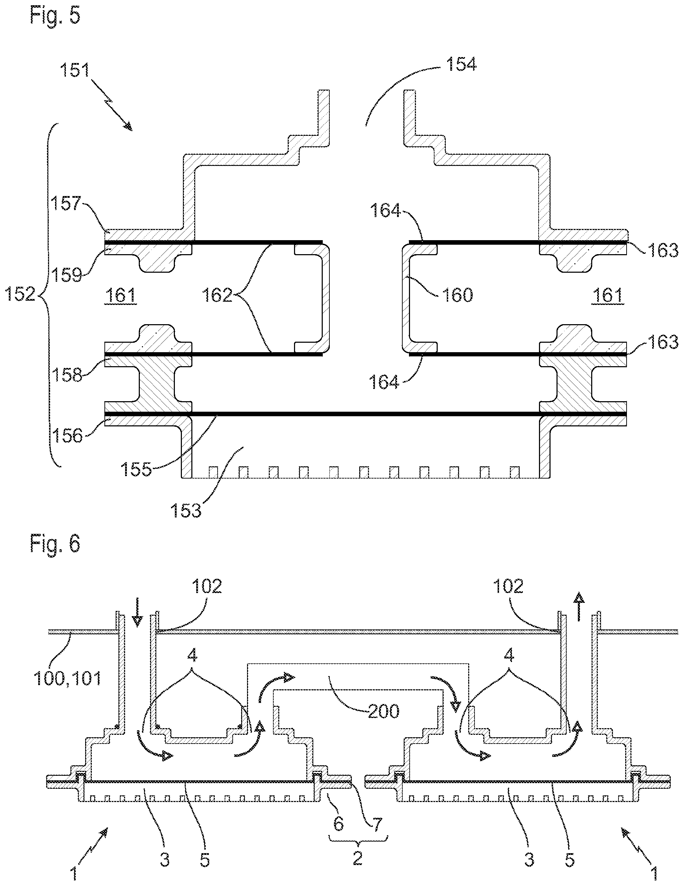

Selon une troisième variante plus minimaliste représentée à la figure 5, le dispositif de sélection des gaz 151 comporte un corps 152 muni d'au moins un premier orifice 153, un deuxième orifice 154 et une première membrane 155 semblables à ceux précédemment décrits.

Par ailleurs, le corps 152 comporte un premier carter 156 muni au moins du premier orifice 153 et un deuxième carter 157 muni au moins du deuxième orifice 154. Les premier et deuxième carters 156,157 sont identiques aux premier et deuxième carters 6,7 précédemment décrits.

Le corps 152 comporte en outre, entre le premier carter 156 et le deuxième carter 157, un troisième carter 158 globalement tubulaire et un quatrième carter 159, les troisième et quatrième carters 158,159 étant identiques aux troisième et quatrième carters 61,62 précédemment décrits. Ainsi, le quatrième carter 159 comporte un tube de transfert 160 et au moins un orifice correspondant au troisième orifice 161 du corps 52. Lesdits carters 156,157,158,159 du corps 152 sont assemblés entre eux de manière étanche.

De même, le dispositif de sélection des gaz 151 comporte deux deuxièmes membranes 162 identiques aux troisièmes membranes 69 précédemment décrites.

Chaque deuxième membrane 162 est mise en place de sorte, d'une part, que son bord périmétrique externe 163 est enserré, de manière étanche, entre le quatrième carter 159 et le troisième carter 158 ou le deuxième carter 157, de préférence, entre leurs bords périmétriques respectifs et, d'autre part, que son bord périmétrique interne 164 soit fixé de manière étanche autour de l'une des extrémités libres du tube de transfert 160 du quatrième carter 159, pour tout moyens adaptés tels que le collage, par exemple.

Ainsi configuré, le dispositif de sélection des gaz 151 garantit que les gaz qui s'écoulent des premier et troisième orifices 152,161 du corps 152 vers le deuxième orifice 154 dudit corps 152, ou réciproquement, passent obligatoirement et uniquement au travers respectivement des première et deuxièmes membranes 155,162.

Par ailleurs, on peut imaginer augmenter encore la surface filtrante du dispositif de sélection des gaz 51,151 en ajoutant un ou plusieurs nouveaux étages comprenant chacun un troisième carter, un quatrième carter et une membrane supplémentaire identiques respectivement aux troisième carter 61,158, quatrième carter 62,159 et membrane 66,162 précédemment décrits.

Selon une quatrième variante représentée à la figure 6, on met en place sur le contenant 100 étanche au moins deux dispositifs de sélection des gaz 1, tels que précédemment décrits, disposés en série. Ainsi, chaque dispositif de sélection des gaz 1 comporte un corps 2 muni d'au moins un premier orifice 3, un deuxième orifice 4 et une première membrane 5.

Par ailleurs, le corps 2 comporte un premier carter 6 muni au moins du premier orifice 3 et un deuxième carter 7 muni au moins du deuxième orifice 4.

Toutefois, dans cette variante de réalisation, chaque dispositif de sélection des gaz 1 comporte deux deuxièmes orifices 204.

Cette configuration permet d'associer en série les au moins deux dispositifs de sélection des gaz 1 grâce à au moins une gaine 200 raccordant entre eux un de leurs deux deuxièmes orifices 4, conformément à la figure 6. L'ensemble ainsi obtenu est alors est être solidarisé, de façon étanche, sur l'une 101 des parois du contenant 100, au droit de deux orifices 102, aménagés sur ladite paroi 101 et mettant en relation l'intérieur du contenant 100 avec l'extérieur de ce dernier, de manière à permettre un écoulement de gaz depuis les deuxièmes orifices 4 libres, c'est-à-dire non raccordés à une gaine 200, au travers dudit orifice 102 associé de la paroi 101, ou réciproquement.

Une fois solidarisé sur le contenant 100, l'ensemble dispositifs de sélection des gaz 1 - gaine 200 est alors avantageusement raccordé, à l'une de ses extrémités, à des moyens de soufflage, non représentés, tels que, par exemple, un ventilateur, afin de créer une ventilation forcée à l'intérieur des deux dispositifs de sélection des gaz 1 et du contenant 100 étanche, selon les flèches représentées sur la figure 6 ou inversement, de sorte à favoriser les échanges gazeux à travers la membrane 5 de chaque dispositif de sélection des gaz 1.

On comprend bien que l'ensemble dispositifs de sélection des gaz 1 - gaine 200 précédemment décrit pourra comporter plus de deux dispositifs de sélection des gaz 1 et donc plus d'une gaine 200 sans sortir du cadre de la présente invention.

En outre, il va de soi que les dispositifs de sélection des gaz 1 pourront également être semblables aux dispositifs de sélection des gaz 51 ou 151 précédemment décrits et comporter au moins un troisième carter, un quatrième carter et une membrane supplémentaire identiques respectivement aux troisième carter 61,158, quatrième carter 62,159 et membrane 66,162 précédemment décrits.

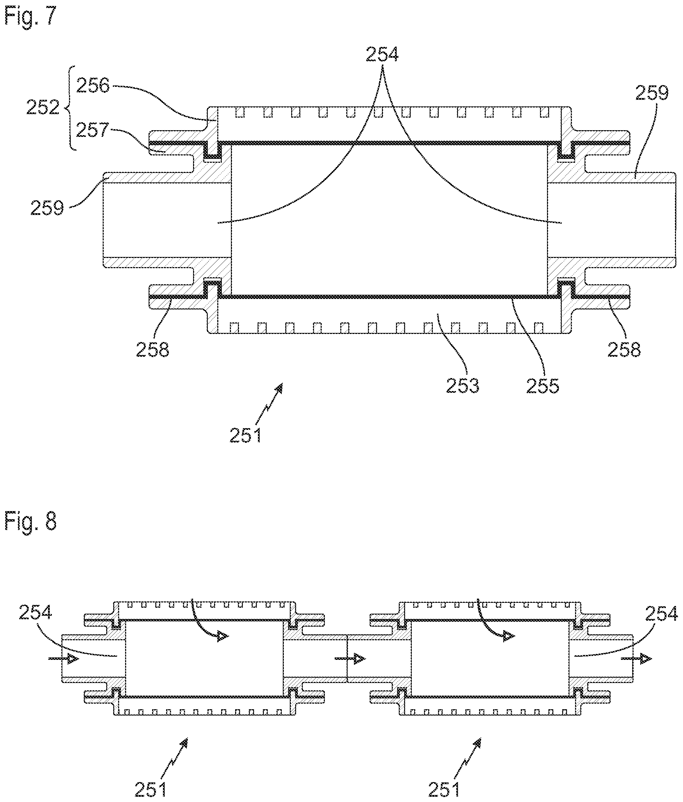

Enfin, selon une dernière variante représentée à la figure 7 et particulièrement adaptée à la disposition en série des dispositifs de sélection des gaz conformes à l'invention, le dispositif de sélection des gaz 251 comporte un corps 252 et au moins un premier orifice 253 radial, deux deuxièmes orifices 254 axiaux et une première membrane 255, de préférence tubulaire, disposée entre lesdits premier et deuxièmes orifices 253,254. Ledit corps 252 est en forme générale de tube cylindrique creux et comprend une paroi longitudinale 256 périphérique cylindrique obturée par deux parois transversales 257 d'extrémité, ladite paroi longitudinale 256 étant munie au moins du premier orifice 253 et chaque paroi transversale 257 étant munie au moins du deuxième orifice 254. Dans cette configuration du dispositif de sélection des gaz 251, la première membrane 255 est mise en place de sorte que ses bords périmétriques 258 d'extrémité est enserré, de manière étanche, entre les parois transversale 257 et longitudinales 256.

Chaque paroi transversale 257 comporte de préférence au droit du deuxième orifice 254 un tube 259 cylindre creux s'étendant en saillie vers l'extérieur du corps 252 du dispositif de sélection des gaz 251 et étant agencé pour venir s'insérer dans un orifice d'une paroi d'un contenant non représenté.

En référence à la figure 8, on comprend bien que cette variante permet facilement une disposition en série en mettant au moins deux dispositifs de sélection des gaz 251 cylindriques bout à bout et en raccordant les deuxièmes orifices 254 libres de l'ensemble obtenu à l'une des parois d'un contenant non représenté.

Une fois solidarisé sur le contenant, l'ensemble dispositifs de sélection des gaz 251 est alors avantageusement raccordé, à l'une de ses extrémités, à des moyens de soufflage, non représentés, tels que, par exemple, un ventilateur, afin de créer une ventilation forcée à l'intérieur des dispositifs de sélection des gaz 251 et du contenant.

### Possibilité d'application industrielle

Le dispositif de sélection des gaz 1 selon l'invention s'applique plus particulièrement au contenant 100 étanche de stockage à atmosphère modifiée ou contrôlée comprenant un bac rigide dans lequel sont stockés les produits périssable à conserver tels que, par exemple, des fruits et légumes, ou encore des fleurs, et un capot refermant le bac de façon étanche, mais il peut également être utilisé sur des contenants de type housses souples d'emballage de palettes ou encore housses de protection partiellement rigides.

Enfin, il va de soi que les exemples de dispositif de sélection des gaz 1 conformes à l'invention qui viennent d'être décrits ne sont que des illustrations particulières, en aucun cas limitatives de l'invention.

## Revendications

1. Dispositif de sélection des gaz (1,51,151,251) pour un contenant (100) étanche de stockage à atmosphère modifiée ou contrôlée pour stocker des produits périssables tels que, par exemple, des fruits et légumes, ou encore des fleurs, comportant un corps (2,52,152,252) creux et au moins un premier orifice (3,53,153,253), un deuxième orifice (4,54,154,254) et une première membrane (5,55,155,255), lesdits premier et deuxième orifices (3,53,153,252 ; 4,54,154,254) mettant en relation l'intérieur dudit corps (2,52,152,252) avec l'extérieur de ce dernier, ladite première membrane (5,55,155,255) étant disposée à l'intérieur dudit corps (2,52,152,252) entre lesdits premier et deuxième orifices (3,53,153,253 ; 4,54,154,254) de sorte que les gaz s'écoulant depuis le premier orifice (3,53,153,253) vers le deuxième orifice (4,54,154,254), ou réciproquement, passent obligatoirement et uniquement au travers de ladite première membrane (5,55,155,255), ledit corps (2,52,152) comprenant au moins un premier carter (6,56,156) muni au moins dudit premier orifice (3,53,153) et un deuxième carter (7,57,157) muni au moins dudit deuxième orifice (4,54,154), ledit dispositif de sélection des gaz (1,51,151,251) étant **caractérisé en ce que** ledit deuxième carter (7,57,157) comporte au droit du deuxième orifice (4,54,154) un tube (14,58) cylindre creux s'étendant en saillie vers l'extérieur du corps (2,52,152) et étant agencé pour venir s'insérer dans un orifice (102) aménagé sur l'une (101) des parois du contenant (100) mettant en relation l'intérieur du contenant (100) avec l'extérieur de ce dernier, afin de solidariser le dispositif de sélection des gaz (1,51,151,251), de façon étanche, sur ladite paroi (101) du contenant (100), au droit dudit orifice (102) , de manière à permettre un écoulement de gaz depuis son deuxième orifice (4,54,154,254) au travers dudit orifice (102) de la paroi (101), ou réciproquement.

2. Dispositif de sélection des gaz (1,51,151) selon la revendication 1, **caractérisé en ce que** le tube (14,58) cylindre creux s'étend au-delà de la paroi (101) dans laquelle il est agencé pour s'insérer.

3. Dispositif de sélection des gaz (1,51,151) selon la revendication 2, **caractérisé en ce que** le tube (14,58) est muni à son extrémité libre d'un organe de fixation (15) apte à coopérer avec un organe de fixation complémentaire (16) pour solidariser de façon non permanente le deuxième carter (7,57,157) sur ladite paroi (101).

4. Dispositif de sélection des gaz (1,51,157) selon l'une quelconque des revendications 1 à 3, **caractérisé en ce qu'**il comporte un joint (17) d'étanchéité agencé pour être comprimé entre la paroi (101) du contenant (100) et le deuxième carter (7,57,157), lorsque le dispositif de sélection des gaz (1,51) est solidarisé sur le contenant (100).

5. Dispositif de sélection des gaz (1) selon l'une quelconque des revendications 1 à 4, **caractérisé en ce que** lesdits premier et deuxième carters (6,7) sont assemblés de façon étanche entre eux et **en ce que** la première membrane (5) est mise en place de sorte que son bord périmétrique (8) est enserré, de manière étanche, entre les bords périmétriques (9,10) respectifs desdits premier et deuxième carters (6,7).

6. Dispositif de sélection des gaz (51) selon l'une quelconque des revendications 1 à 4, **caractérisé en ce que** le deuxième carter (57) comprend un orifice correspondant au troisième orifice (59) du corps (52) et mettant en relation l'intérieur du deuxième carter (57) avec l'extérieur de ce dernier, **en ce que** le corps (52) comporte entre le premier carter (56) et le deuxième carter (57), deux troisièmes carters (61) globalement tubulaires et un quatrième carter (62) disposé entre lesdits troisièmes carters (61) et comportant au moins un orifice transversal correspondant au quatrième orifice (63) du corps (52) et mettant en relation l'intérieur dudit quatrième carter (62) avec l'extérieur de ce dernier et **en ce que** le dispositif de sélection des gaz (51) comporte une deuxième membrane (68) et deux troisièmes membranes (69) disposées à l'intérieur dudit corps (52) de sorte que les gaz qui s'écoulent depuis les premier, troisième et quatrième orifices (53 ; 59 ; 63) du corps (52) vers le deuxième orifice (54) dudit corps (52), ou réciproquement, passent obligatoirement et uniquement au travers respectivement des première, deuxième et troisièmes membranes (55 ; 65 ; 66).

7. Dispositif de sélection des gaz (151) selon l'une quelconque des revendications 1 à 4, **caractérisé en ce que** le corps (152) comporte entre le premier carter (156) et le deuxième carter (157), un troisième carter (158) globalement tubulaires et un quatrième carter (159) comportant au moins un orifice transversal correspondant au troisième orifice (161) du corps (152) et mettant en relation l'intérieur dudit quatrième carter (159) avec l'extérieur de ce dernier et **en ce que** le dispositif de sélection des gaz (151) comporte deux deuxièmes membranes (162) disposées à l'intérieur dudit corps (52) de sorte que les gaz qui s'écoulent depuis les premier et troisième orifices (153 ; 161) du corps (152) vers le deuxième orifice (154) dudit corps (152), ou réciproquement, passent obligatoirement et uniquement au travers respectivement des première et deuxièmes membranes (155 ; 162).

8. Dispositif de sélection des gaz (1,51,151) selon l'une quelconque des revendications 1 à 7, **caractérisé en ce que** chaque membrane est plissée.

9. Dispositif de sélection des gaz (1,51,151) selon l'une quelconque des revendications 1 à 8, **caractérisé en ce qu'**il comporte deux deuxièmes orifices (4,54,154) et **en ce qu'**il est associé en série avec au moins un dispositif de sélection des gaz (1,51,151) identique de sorte à raccorder entre eux un de leurs deux deuxièmes orifices (4,54,154) grâce à au moins une gaine (200), l'ensemble ainsi obtenu étant alors, d'une part, solidarisé, de façon étanche, sur l'une (101) des parois du contenant (100), au droit de deux orifices (102), aménagés sur ladite paroi (101) et mettant en relation l'intérieur du contenant (100) avec l'extérieur de ce dernier, de manière à permettre un écoulement de gaz depuis les deuxièmes orifices (4,54,154) libres, au travers dudit orifice (102) associé de la paroi (101), ou réciproquement et, d'autre part, raccordé, à l'une de ses extrémités libres, à des moyens de soufflage, afin de créer une ventilation forcée à l'intérieur des deux dispositifs de sélection des gaz (1,51,151) et du contenant (100) étanche.

## Patentansprüche

1. Vorrichtung zur Auswahl von Gasen (1, 51, 151, 251) für einen dichten Lagerbehälter (100) mit veränderter oder kontrollierter Atmosphäre zur Lagerung verderblicher Produkte, wie beispielsweise Obst und Gemüse, oder aber Blumen, einen hohlen Körper (2, 52, 152, 252) und mindestens eine erste Öffnung (3, 53, 153, 253), eine zweite Öffnung (4, 54, 154, 254) und eine erste Membran (5, 55, 155, 255) beinhaltend, wobei die erste und zweite Öffnung (3, 53, 153, 253; 4, 54, 154, 254) das Innere des Körpers (2, 52, 152, 252) mit dem Äußeren dieses Letzteren in Beziehung bringen, wobei die erste Membran (5, 55, 155, 255) im Inneren des Körpers (2, 52, 152, 252) zwischen der ersten und zweiten Öffnung (3, 53, 153, 253; 4, 54, 154, 254) angeordnet ist, sodass die Gase, die von der ersten Öffnung (3, 53, 153, 253) zur zweiten Öffnung (4, 54, 154, 254) oder umgekehrt strömen, gezwungenermaßen und ausschließlich durch die erste Membran (5, 55, 155, 255) hindurch verlaufen, wobei der Körper (2, 52, 152) mindesten ein erstes Gehäuse (6, 56, 156) umfasst, das mindestens mit der ersten Öffnung (3, 53, 153) versehen ist, und ein zweites Gehäuse (7, 57, 157), das mindestens mit der zweiten Öffnung (4, 54, 154) versehen ist, wobei die Vorrichtung zur Auswahl von Gasen (1, 51, 151, 251) **dadurch gekennzeichnet ist, dass** das zweite Gehäuse (7, 57, 157) auf Höhe der zweiten Öffnung (4, 54, 154) ein Hohlzylinderrohr (14, 58) beinhaltet, das sich hervorstehend zur Außenseite des Körpers (2, 52, 152) erstreckt und angeordnet ist, um in eine Öffnung (102) eingeführt zu werden, die an einer (101) der Wände des Behälters (100) vorgesehen ist, die das Innere des Behälters (100) mit dem Äußeren dieses Letzteren in Beziehung bringt, um die Vorrichtung zur Auswahl von Gasen (1, 51, 151, 251) in dichter Form fest an der Wand (101) des Behälters (100), auf Höhe der Öffnung (102), zu verbinden, um ein Strömen des Gases von seiner zweiten Öffnung (4, 54, 154, 254) durch die Öffnung (102) der Wand (101) hindurch, oder umgekehrt, zu ermöglichen.

2. Vorrichtung zur Auswahl von Gasen (1, 51, 151) nach Anspruch 1, **dadurch gekennzeichnet, dass** sich das Hohlzylinderrohr (14, 58) über die Wand (101), in der es angeordnet ist, hinaus erstreckt, um eingeführt zu werden.

3. Vorrichtung zur Auswahl von Gasen (1, 51, 151) nach Anspruch 2, **dadurch gekennzeichnet, dass** das Rohr (14, 58) an seinem freien Ende mit einem Befestigungsorgan (15) versehen ist, das imstande ist, mit einem ergänzenden Befestigungsorgan (16) zusammenzuwirken, um das zweite Gehäuse (7, 57, 157) in nicht permanenter Form fest mit der Wand (101) zu verbinden.

4. Vorrichtung zur Auswahl von Gasen (1, 51, 151) nach einem der Ansprüche 1 bis 3, **dadurch gekennzeichnet, dass** sie eine Dichtung (17) beinhaltet, die ausgeführt ist, um zwischen der Wand (101) des Behälters (100) und dem zweiten Gehäuse (7, 57, 157) komprimiert zu werden, wenn die Vorrichtung zur Auswahl von Gasen (1, 51) fest an dem Behälter (100) verbunden ist.

5. Vorrichtung zur Auswahl von Gasen (1) nach einem der Ansprüche 1 bis 4, **dadurch gekennzeichnet, dass** das erste und zweite Gehäuse (6, 7) in dichter Form miteinander zusammengesetzt sind, und dadurch, dass die erste Membran (5) derart angebracht ist, dass ihr umlaufender Rand (8) in dichter Form zwischen den jeweiligen umlaufenden Rändern (9, 10) des ersten und zweiten Gehäuses (6, 7) eingeklemmt ist.

6. Vorrichtung zur Auswahl von Gasen (51) nach einem der Ansprüche 1 bis 4, **dadurch gekennzeichnet, dass** das zweite Gehäuse (57) eine Öffnung umfasst, die der dritten Öffnung (59) des Körpers (52) entspricht, und das Innere des zweiten Gehäuses (57) mit dem Äußeren dieses Letzteren in Beziehung bringt, dadurch, dass der Körper (52) zwischen dem ersten Gehäuse (56) und dem zweiten Gehäuse (57) zwei im Allgemeinen rohrförmige dritte Gehäuse (61) und ein viertes Gehäuse (62) beinhaltet, das zwischen den dritten Gehäusen (61) angeordnet ist, und mindestens eine querlaufende Öffnung beinhaltet, die der vierten Öffnung (63) des Körpers (52) entspricht, und das Innere des vierten Gehäuses (62) mit dem Äußeren dieses Letzteren in Beziehung bringt, und dadurch, dass die Vorrichtung zur Auswahl von Gasen (51) eine zweite Membran (68) und zwei dritte Membrane (69) beinhaltet, die derart im Inneren des Körpers (52) angeordnet sind, dass die Gase, die von der ersten, dritten und vierten Öffnung (53; 59; 63) des Körpers (52) zur zweiten Öffnung (54) des Körpers (52), oder umgekehrt, strömen, gezwungenermaßen und ausschließlich jeweils durch die erste, zweite und dritte Membran (55; 65; 66) verlaufen.

7. Vorrichtung zur Auswahl von Gasen (151) nach einem der Ansprüche 1 bis 4, **dadurch gekennzeichnet, dass** der Körper (152) zwischen dem ersten Gehäuse (156) und dem zweiten Gehäuse (157) ein im Allgemeinen rohrförmiges drittes Gehäuse (158) und ein viertes Gehäuse (159) beinhaltet, das mindestens eine querlaufende Öffnung beinhaltet, die der dritten Öffnung (161) des Körpers (152) entspricht, und das Innere des vierten Gehäuses (159) mit dem Äußeren dieses Letzteren in Beziehung bringt, und dadurch, dass die Vorrichtung zur Auswahl von Gasen (151) zwei zweite Membrane (162) beinhaltet, die derart im Inneren des Körpers (52) angeordnet sind, dass die Gase, die von der ersten und dritten Öffnung (153; 161) des Körpers (152) zur zweiten Öffnung (154) des Körpers (152), oder umgekehrt, strömen, gezwungenermaßen und ausschließlich jeweils durch die erste und zweite Membran (155; 162) verlaufen.

8. Vorrichtung zur Auswahl von Gasen (1, 51, 151) nach einem der Ansprüche 1 bis 7, **dadurch gekennzeichnet, dass** jede Membran gefaltet ist.

9. Vorrichtung zur Auswahl von Gasen (1, 51, 151) nach einem der Ansprüche 1 bis 8, **dadurch gekennzeichnet, dass** sie zwei Öffnungen (4, 54, 154) beinhaltet, und dadurch, dass sie in Reihe mit mindestens einer identischen Vorrichtung zur Auswahl von Gasen (1, 51, 151) verknüpft ist, um zwischen einander eine ihrer beiden zweiten Öffnungen (4, 54, 154) Dank mindestens einer Ummantelung (200) anzuschließen, wobei die so erhaltene Einheit somit einerseits in dichter Form auf Höhe von zwei Öffnungen (102), die an der Wand (101) vorgesehen sind, fest mit einer (101) der Wände des Behälters (100) verbunden ist, und das Innere des Behälters (100) mit dem Äußeren dieses Letzteren in Beziehung bringt, um ein Strömen von Gas von den zweiten freien Öffnungen (4, 54, 154) durch die Öffnung (102) hindurch, die mit der Wand (101) verknüpft ist, hindurch oder umgekehrt, und andererseits mit einem ihrer freien Enden an Mittel zum Einblasen angeschlossen ist, um eine erzwungene Lüftung im Inneren der beiden Vorrichtungen zur Auswahl von Gasen (1, 51, 151) und des dichten Behälters (100) zu schaffen.

## Claims

1. Gas-selection device (1, 51, 151, 251) for a sealed storage container (100) with modified or controlled atmosphere for storing perishable products such as for example fruits and vegetables, or flowers, comprising a hollow body (2, 52, 152, 252) and at least one first orifice (3, 53, 153, 253), a second orifice (4, 54, 154, 254) and a first membrane (5, 55, 155, 255), said first and second orifices (3, 53, 153, 253; 4, 54, 154, 254) connecting the inside of said body (2, 52, 152, 252) with the outside thereof, said first membrane (5, 55, 155, 255) being disposed inside said body (2, 52, 152, 252) between said first and second orifices (3, 53, 153, 253; 4, 54, 154, 254) so that the gases flowing from the first orifice (3, 53, 153, 253) to the second orifice (4, 54, 154, 254), or vice versa, necessarily and solely pass through said first membrane (5, 55, 155, 255), said body (2, 52, 152) comprising at least one first casing (6, 56, 156) provided with at least said first orifice (3, 53, 153) and a second casing (7, 57, 157) provided with at least said second orifice (4, 54, 154), said gas-selection device (1, 51, 151, 251) being **characterised in that** said second casing (7, 57, 157) comprises, in line with the second orifice (4, 54, 154), a hollow cylindrical tube (14, 58) projecting towards the outside of the body (2, 52, 152) and being arranged so as to be inserted in an orifice (102) provided on one (101) of the walls of the container (100) connecting the inside of the container (100) to the outside thereof, in order to secure the gas-selection device (1, 51, 151, 251), sealingly, to said wall (101) of the container (100), in line with said orifice (102), so as to allow a flow of gas from its second orifice (4, 54, 154, 254) through said orifice (102) in the wall (101), or vice versa.

2. Gas-selection device (1, 51, 151) according to claim 1, **characterised in that** the hollow cylindrical tube (14, 58) extends beyond the wall (101) in which it is arranged so as to be inserted.

3. Gas-selection device (1, 51, 151) according to claim 2, **characterised in that** the tube (14, 58) is provided at its free end with a fixing member (15) able to cooperate with a complementary fixing member (16) in order to secure the second casing (7, 57, 157) non-permanently to said wall (101).

4. Gas-selection device (1, 51, 151) according to any of claims 1 to 3, **characterised in that** it comprises a gasket (17) arranged so as be compressed between the wall (101) of the container (100) and the second casing (7, 57, 157) when the gas-selection device (1,51) is secured to the container (100).

5. Gas-selection device (1) according to any of claims 1 to 4, **characterised in that** said first and second casings (6, 7) are assembled together sealingly and **in that** the first membrane (5) is placed so that its perimeter edge (8) is gripped sealingly between the respective perimeter edges (9, 10) of said first and second casings (6, 7).

6. Gas-selection device (51) according to any of claims 1 to 4, **characterised in that** the second casing (57) comprises an orifice corresponding to the third orifice (59) of the body (52) and connecting the inside of the second casing (57) to the outside thereof, **in that** the body (52) comprises, between the first casing (56) and the second casing (57), two roughly tubular third casings (61) and a fourth casing (62) disposed between said third casings (61) and comprising at least one transverse orifice corresponding to the fourth orifice (63) in the body (52) and connecting the inside of said fourth casing (62) to the outside thereof, and **in that** the gas-selection device (51) comprises a second membrane (68) and two third membranes (69) disposed inside said body (52) so that the gases that flow from the first, third and fourth orifices (53; 59; 63) in the body (52) to the second orifice (54) in said body (52), or vice versa, necessarily and solely pass through respectively the first, second and third membranes (55; 65; 66).

7. Gas-selection device (151) according to any of claims 1 to 4, **characterised in that** the body (152) comprises, between the first casing (156) and the second casing (157), a roughly tubular third casing (158) and a fourth casing (159) comprising at least one transverse orifice corresponding to the third orifice (161) in the body (152) and connecting the inside of said fourth casing (159) with the outside thereof, and **in that** the gas-selection device (151) comprises two second membranes (162) disposed inside said body (52) so that the gases that flow from the first and third orifices (153; 161) in the body (152) to the second orifice (154) in said body (152), or vice versa, necessarily and solely pass through respectively the first and second membranes (155; 162).

8. Gas-selection device (1, 51, 151) according to any of claims 1 to 7, **characterised in that** each membrane is pleated.

9. Gas-selection device (1, 51, 151) according to any of claims 1 to 8, **characterised in that** it comprises two second orifices (4, 54, 154) and **in that** it is associated in series with at least one identical gas-selection device (1, 51, 151) so as to connect together one of their two second orifices (4, 54, 154) by means of at least one sheath (200), the assembly thus obtained then being firstly sealingly secured to one (101) of the walls of the container (100), in line with two orifices (102) provided on said wall (101), and connecting the inside of the container (100) with the outside thereof, so as to allow a flow of gas from the second free orifices (4, 54, 154), through said associated orifice (102) in the wall (101), or vice versa, and secondly connected, at one of its free ends, to blowing means, in order to create forced ventilation inside the two gas-selection devices (1, 51, 151) and the sealed container (100).
